Europäisches Patentamt

**European Patent Office**

**Office européen des brevets**

(11) Veröffentlichungsnummer: **0 017 834**
**B1**

# EUROPÄISCHE PATENTSCHRIFT

(45) Veröffentlichungstag der Patentschrift:
26.05.82

(51) Int. Cl.³: **G 11 B 5/70**

(21) Anmeldenummer: **80101707.0**

(22) Anmeldetag: **31.03.80**

(54) **Magnetisches Speichermedium und Verfahren zu dessen Herstellung.**

(30) Priorität: **11.04.79 DE 2914659**

(43) Veröffentlichungstag der Anmeldung:
**29.10.80 Patentblatt 80/22**

(45) Bekanntmachung des Hinweises auf die Patenterteilung:
**26.05.82 Patentblatt 82/21**

(84) Benannte Vertragsstaaten:
**DE FR GB**

(56) Entgegenhaltungen:
**DE-B-1 096 053**
**US-A-4 000 336**

(73) Patentinhaber: **AGFA-GEVAERT Aktiengesellschaft,
D-5090 Leverkusen 1 (DE)**

(72) Erfinder: **Kohler, Robert, Dr., Am Katzenstein 24,
D-8031 Wessling (DE)**
Erfinder: **Schilffarth, Karlchristian, Dr.,
Schubertstrasse 3, D-8021 Sauerlach (DE)**
Erfinder: **Kober, Heinrich, Dr., Georgstrasse 12,
D-8021 Hohenschäftlarn (DE)**
Erfinder: **Nippe, Burkhard, Dr., Krennerweg 20,
D-8000 München 71 (DE)**

## Magnetisches Speichermedium und Verfahren zu dessen Herstellung

Die Erfindung bezieht sich auf magnetische Speichermedien und deren Herstellung. Insbesondere befasst sich die Erfindung mit Zusammensetzung und Herstellung von Magnetbeschichtungen auf flexible Schichtträger, wobei die Beschichtungssysteme in Wasser dispergierte Polymere sowie magnetische Pigmente enthalten.

Die Polymeren haben den Zweck, das magnetisierbare Material in eine abriebfeste Schicht einzubinden und fest auf der Trägerfolie zu verankern.

Zur Herstellung der bekannten und handelsüblichen Magnetbeschichtungen werden allgemein Lösungen von Polymeren in organischen Lösungsmitteln verwendet, in welche magnetische Pigmente eindispergiert werden. Solche Beschichtungssysteme zeigen ausgezeichnete Haftung auf den Trägerfolien und gute mechanische Festigkeit, vor allem jedoch erlauben sie eine sehr hohe Packungsdichte des magnetischen Pigments in der Schicht, wie sie zur Erzielung der geforderten speichertechnischen Eigenschaften unerlässlich ist. So beträgt bei marktgängigen Magnetschichten der Volumenanteil des magnetisierbaren Materials in der fertigen Schicht im allgemeinen zwischen 30% und 50%. Die Verwendung von organischen Lösungsmitteln zur Herstellung der Magnetbeschichtungen bringt jedoch Nachteile mit sich. Die Lösungsmittel und ihre Dämpfe sind gesundheitsschädlich und feuergefährlich. Es müssen aufwendige Sicherheitsvorkehrungen getroffen werden, um Explosionen und Brände zu verhüten und das Personal zu schützen. Darüberhinaus sind zur Vermeidung der Luftverschmutzung und zur Rohstoffersparnis Massnahmen zur Lösungsmittel-Rückgewinnung notwendig. Um diese ernsten Nachteile zu vermeiden ist mehrfach vorgeschlagen worden, Magnetbeschichtungen mit in Wasser gelösten oder in Wasser dispergierten Polymermaterialien herzustellen. Zum Beispiel sind solche Verfahren in den Patentschriften DE-AS 10 96 053, DE-AS 25 13 421, GB-PS 922 905, US-PS 3 725 285, US-PS 3 795 539 und FR-PS 2 258 685 beschrieben. Als in Wasser dispergierte oder gelöste Polymere werden vor allem Polymere der Acrylsäure oder Methacrylsäure und der Acrylsäure- bzw. Methacrylsäureester empfohlen, ebenso Mischpolymerisate dieser Verbindungen untereinander oder mit anderen Monomeren wie Vinylchlorid, Vinylidenchlorid, Vinylacetat oder anderen. Auch der Einsatz von Mischungen verschiedener Polymeren, die in Wasser zum Teil gelöst, zum Teil dispergiert als Latices vorliegen, wurde vorgeschlagen. Nun ist bekannt, dass Polymere vom Typ der Acrylate relativ thermoplastisch sind. Da die Magnetschichten üblicherweise durch Kalanderung bei hohem Druck verdichtet und an ihrer Oberfläche geglättet werden, kann die Thermoplastizität zu Schwierigkeiten bei der Kalanderung führen, indem solche Schichten an den Kalanderwalzen festkleben. Aus diesem Grund und auch um die unzureichende mechanische Widerstandsfähigkeit von Magnetbeschichtungen mit Acrylat-Polymeren zu verbessern, ist im allgemeinen eine Vernetzung z.B. mit Kondensationsprodukten eines Amins, notwendig, wie es in FR-PS 2 258 685 und DE-AS 25 13 421 beschrieben ist.

Aufgrund des permanenten Magnetismus des magnetisierbaren Materials, wie zum Beispiel des ferromagnetischen $\gamma$-Fe$_2$O$_3$ Pulvers, herrscht zwischen den Einzelteilchen eine Anziehungskraft, die der Dispergierung in einem Magnetbeschichtungslack entgegenwirkt. Es ist klar, dass die Dispergierung umso schwieriger wird, je höher die Konzentration des magnetisierbaren Materials ist. Gleichermassen nimmt die mechanische Belastbarkeit wie zum Beispiel die Abriebfestigkeit und Kohäsion der Schichten ab, wenn der Anteil des magnetisierbaren Materials im Beschichtungssystem einen bestimmten kritischen Wert übersteigt. Die maximal mögliche sinnvolle Konzentration an magnetisierbarem Material hängt sehr stark ab von der Art des verwendeten Polymermaterials und der Zusammensetzung des wässrigen Dispersionsmediums. Um die guten speichertechnischen Eigenschaften nach dem Stand der Technik zu erzielen, sind – wie oben erwähnt – Packungsdichten des magnetischen Pigments in der Schicht von mindestens 30–40 Vol.-% notwendig. Diese werden im allgemeinen nur erreicht, wenn im Beschichtungslack der Volumenanteil des magnetisierbaren Materials mehr als 40% des gesamten Feststoffvolumens beträgt.

Voraussetzung für derart hohe Pigmentierungen ist eine optimale Dispergierung der Pigmentteilchen in dem Sinne, dass die magnetischen Anziehungskräfte zwischen den Partikeln durch elektrische Oberflächenladungen und/oder sterische Adsorptionsschichten soweit wie möglich verringert werden. Dies ist nicht nur erforderlich, um die Beschichtungslacke für die zur Verarbeitung notwendige Zeit zu stabilisieren, sondern wesentlich auch, um die nadel- oder stäbchenförmigen Pigmentteilchen so beweglich zu halten, dass sie beim Verguss leicht in eine Vorzugsrichtung ausgerichtet werden können.

Die Dispergierbarkeit der Teilchen wird hauptsächlich durch das Zusammenspiel der magnetischen Pigmente mit den Dispergatoren einerseits und der Dispersion des polymeren Bindemittels andererseits bestimmt, wobei für jedes Magnetmaterial bzw. jede Polymerdispersion geeignete Dispergatoren ermittelt werden müssen. Voraussetzung ist, dass die Bindemitteldispersion sowohl mit dem Magnetmaterial als auch mit dem Dispergator verträglich ist. Es hat sich nun herausgestellt, dass solche wässrigen Polymerdispersionen oder -lösungen, wie sie in den genannten Schriften bisher beschrieben sind, gegen Zusätze nur bedingt verträglich sind, so dass zum Beispiel die Auswahl geeigneter Dispergatoren sehr eingeschränkt ist. Demzufolge ist die Pigmentierdispergierung in den meisten Fällen ungenügend, zusammen mit den schon erwähnten Nachteilen dieser Polymeren ergeben sich damit Schichten, die bei den notwendigen hohen Pigmentierungen nur ungenügende mechanische Festigkeit aufweisen. Hinzu kommt noch, dass die wässrigen Dispersionen oder Latices diskrete Polymerteilchen, die mit den Pigmentteilchen grössenmässig vergleichbar sind, enthalten, während Polymerteilchen gelöst in organischen Lösungsmitteln sehr viel kleiner sind als die Pigmentteilchen, deren Abmessungen in der Grössenordnung von 0,1–0,5 µm Länge und 0,01–0,05 µm Breite liegen. Bei hohen Pigmentanteilen bei der Schichtbildung können sich Pigment- und Polymerteilchen der Dispersion gegenseitig behindern. Solche Schichten zeigen schlechte Kohäsion und erhöhten Abrieb, der selbst bei Vernetzung noch deutlich stärker ist, als bei den marktüblichen Schichten, sobald der Anteil des magnetisierbaren Materials im Beschichtungslack mehr als etwa 40% des gesamten Feststoffes beträgt. Aus den veröffentlichten Beschreibungen lässt sich auch entnehmen, dass die vorgeschlagenen wässrigen Beschichtungen deutlich geringere Pigmentanteile enthalten. Dies hat aber zur Folge, dass die Packungsdichten in der fertigen Schicht ungenügend sind und somit schlechtere Speichereigenschaften erwarten lassen.

Es ist somit Aufgabe der Erfindung, Magnetbeschichtungen unter Einsatz von Polymeren in wässriger Dispersion zu schaffen, die die genannten Nachteile nicht aufweisen. Es ist insbesondere die Aufgabe der Erfindung, Magnetbeschichtungen mit Wasser als Dispersionsmedium zu schaffen, die nicht nur hinsichtlich der Packungsdichte des magnetisierbaren Materials mit den handelsüblichen Magnetschichten vergleichbar sind und somit gleichwertige speichertechnische Daten aufweisen, sondern auch eine gleichartige mechanische Belastbarkeit besitzen.

Die Aufgabe wird erfindungsgemäss gelöst durch ein magnetisches Speichermedium, bestehend aus einem flexiblen Schichtträger, insbesondere auf Basis von Polyäthylenterephthalat mit mindestens einer aus wässriger Bindemitteldispersion aufgetragenen Magnetschicht, die als Bindemittel in Wasser dispergierte Polyurethane mit funktionellen, zur Salzbildung befähigten Gruppen und magnetische Pigmente enthält, wobei das Volumenverhältnis des Pigments zum Polyurethan als Feststoff zwischen 0,7:1 und 1,4:1 liegt.

Bei diesen Bindemitteldispersionen handelt es sich um Dispersionen von Polyurethanionomeren, deren Teilchengrösse zwischen 20 nm und 1000 nm liegt, bevorzugt unter 400 nm.

Es handelt sich um anionische Polyurethananionomere mit funktionellen, zur Salzbildung befähigten Gruppen mit einem Anteil von 0,02 – höchstens 13 Gew.-% bezogen auf Polyurethan und zwar bevorzugt mit einem Gehalt von 0,02–3 Gew.-% an $SO_3^-$ - und/oder $COO^-$ -Gruppen.

Magnetbeschichtungen, die als Bindemittel in organischen Lösungsmitteln dispergierte Polyurethane enthalten, sind aus der US-PS-4 000 336 bekannt.

Verfahren zur Herstellung von wässrigen Polyurethandispersionen sind in DE-PS 11 84 946, DE-PS 11 78 586, DE-AS 12 37 306, DE-OS 14 95 705, DE-OS 15 95 602, DE-OS 17 70 068, DE-OS 20 19 324, DE-OS 24 46 440, GB-PS 1 076 688, vergl. auch D. Dietrich et al, Angew.Chemie 82, 53 (1970) beschrieben. Diese Dispersionen beruhen auf dem Prinzip, in eine makromolekulare Kette eines Polyurethan-Moleküls hydrophile Zentren einzubauen. Diese hydrophilen Zentren oder sogenannten inneren Emulgatoren stabilisieren die Polymerteilchen. Die Dispersionen gewinnen dadurch wesentlich an Stabilität gegenüber den zur Herstellung von Magnetschichten erforderlichen Zusätzen. Die hohe Elektrolytstabilität macht sie unempfindlich gegenüber den mit den magnetischen Pigmenten eingeführten Ionen und schafft damit die Voraussetzung für hohe Pigmentierungen. Ein weiterer Vorzug der mit inneren Emulgatoren stabilisierten Polyurethandispersionen ist, dass die wässrige Phase praktisch emulgatorfrei sein kann. Aus diesem Grund und wegen der hohen Stabilität unterliegt die Auswahl der zur Dispergierung der Pigmente erforderlichen Dispergatoren praktisch keinerlei Einschränkungen, so dass optimale Kombinationen gefunden werden können. Die Polymerteilchen der Dispersionen sind ausserordentlich schmiegsam und verfilmen auch bei hohen Pigmentgehalten zu elastischen Filmen mit sehr guter Kohäsion und ausgezeichneter Abriebfestigkeit.

Zur Herstellung der Magnetbeschichtungslacke wird das magnetisierbare Pigment in der wässrigen Polyurethan-Dispersion dispergiert. Dazu sollen die Pigmentagglomerate zerteilt werden, ohne dass die primären Pigmentteilchen, die meist nadel- oder stäbchenförmige Gestalt haben, in sich zerbrochen werden. Der Dispergiervorgang wird daher bis zu einem Optimum geführt, bei dem maximale Mengen an Primärteilchen vorliegen, aber die Anzahl an beschädigten Teilchen vernachlässigbar bleibt. Hierfür eignen sich alle Mahlwerke, die diese Forderung erfüllen. Bewährt haben sich zum Beispiel Kugelmühlen, Perlmühlen, Sandmühlen o.ä. Die Dispergierung kann erfolgen, indem das Pigment mit Wasser und geeigneten Dispergier-Hilfsmitteln auf die gewünschte Feinheit vermahlen und die Pigmentpaste danach in die Polyurethan-Dispersion eingerührt wird. Es ist jedoch auch möglich, bei Einsatz von scherstabilen Polyurethandispersionen, diese zusammen mit dem Magnetpigment dem Mahlvorgang zu unterwerfen. Die anschliessende Auftragung der Dispersionen und deren Trocknung zur Entfernung des Wassers erfolgt in an sich bekannter Weise.

Als magnetisierbares Material können alle für magnetische Speichermedien gebräuchlichen ferromagnetischen Stoffe eingesetzt werden, zum Beispiel $\gamma\text{-}Fe_2O_3$, Magnetit, mit Co- oder anderen Metallen dotierte Eisenoxide, Ferrite, stabilisierte $CrO_2$- oder Metallpulver-Pigmente.

Da die Pigmentteilchen aufgrund ihres permanenten Magnetismus sich gegenseitig anziehen und somit zur Reagglomeration neigen, muss die Dispergierung in Gegenwart geeigneter Dispergatoren durchgeführt werden, welche durch elektrische Aufladung der Teilchen und/oder durch Aufbau sterisch stabilisierender Adsorptionsschichten die irreversible Flockung der Teilchen verhindern. Die Dispergatoren müssen nach Art und Konzentration auf das gesamte System abgestimmt werden, da nur bei optimaler Dispergierung die erforderliche Pigment-Packungsdichte erreicht werden kann. Dispergatoren die einzeln oder in Kombinationen eingesetzt werden können sind zum Beispiel:

a) anorganische polymere Phosphorverbindungen wie Hexametaphosphate und Polyphosphate zum Beispiel in Form ihrer Alkali-Salze.

b) Tenside wie
- Alkylbenzolsulfonate
- Alkylnaphthalinsulfonate
- primäre, sekundäre oder tertiäre Alkylphosphate
- Lecithin
- Salze der Alkyl-Sulfo-Bernsteinsäure
- Alkyl-phenyl-Polyäthylenoxide
- äthoxylierte Fettsäure-Amine bzw. deren Ammonium-Salze
- Polyoxyläthylen-Fettsäure-Äther
- Sorbitan-Fettsäureester, gegebenenfalls mit Polyäthylenoxid modifiziert
- fluorhaltige Tenside
  wie zum Beispiel Perfluoralkyl-sulfonsäuren

c) organische wasserlösliche Polymere wie
- Polymere der Acrylsäure bzw. Methacrylsäure
  sowie deren Alkali- oder Ammonium-Salze
- Polyacrylamide
- natürliche Kolloide wie Gelatine, Gummi-acabicum, Casein, Alginate
- Hydroxymethylcellulose
- Polyethylenoxide und Polypropylenoxide
- Blockpolymere aus Polyethylenoxid und Polypropylenoxid
- Polyurethane
- Polyvinylalkohol
- Polyvinylpyrollidon
- Polyvinylsulfonate
- Copolymere von Maleinsäureanhydrid mit Olefinen
- sulfatierte Naphthalinkondensate
- polymere Alkylnaphthalinsulfonate
- polymere Phosphorsäureester

Die Adsorption der Dispergatoren am Pigment und damit ihre Dispergierwirkung hängt vom pH-Wert des Systems stark ab. Es ist daher in aller Regel notwendig, einen optimalen pH-Wert einzustellen, auch im Hinblick auf die elektrische Wechselwirkung zwischen Pigment und Polymerteilchen. Man verwendet zur pH-Regulation vorzugsweise flüchtige Säuren und Basen, die beim Trocknungsvorgang wieder aus der Schicht entfernt werden. Im Falle von anionischen PU-Dispersionen und $\gamma$-$Fe_2O_3$ arbeitet man bevorzugt bei pH=7 bis 10, der sich mit $NH_3$ oder Aminen leicht einstellen lässt. Obwohl aus den drei Komponenten – magnetisches Pigment, wässriger Bindemitteldispersion und Dispergator – grundsätzlich bereits brauchbare Magnetbeschichtungslacke herstellbar sind, ist es in der Praxis häufig vorteilhaft, dem Lack bestimmte Additive zuzusetzen. So ist es notwendig, jede Schaumbildung, die zu Begussstörungen führen könnte, zu vermeiden. Dies geschieht am zweckmässigsten bereits durch Verwendung entsprechender Dispergatoren und einer geeigneten Technologie. Dennoch kann es notwendig sein, Entschäumer zuzusetzen. Desweiteren kann es erforderlich sein, die Viskosität des Magnetbeschichtungslackes zu modifizieren, zum Beispiel durch Einsatz von Verdickern. Dazu eignen sich wasserlösliche Polymere wie zum Beispiel Polyacrylate, Polymethacrylate, Polacrylamide, Polyurethane o.ä. In der an sich bekannten Weise können den Dispersionen je nach Erfordernis Füllstoffe, Gleitmittel, Haftvermittler zugesetzt werden. Als nicht magnetische, flexible Schichtträger, die eine Stärke von 3–50 μm, vorzugsweise 10–40 μm haben, eignen sich üblich verwendete Materialien, insbesondere Folien aus linearen Polyestern wie Polyethylenterephthalat. Die Herstellung der Magnetschichten kann in bekannter Weise sich vollziehen. Die gemahlene, pigmentierte, wässrige Polyurethandispersion wird mittels eines üblichen Beschichtungsverfahrens beispielsweise mit einem Extruder-, Rasterdruckgiesser, u.ä. auf den Schichtträger aufgetragen. Vor dem Trocknen der Schicht wird die Dispersion in einem Magnetfeld magnetisch ausgerichtet. Die Trocknung erfolgt bei einer Temperatur zwischen 50 °C und 120 °C während 2 sec bis 10 min. Zur Oberflächenbehandlung wird die Magnetschicht kalandriert, wobei die Schicht zwischen geheizten und polierten Walzen unter Druck hindurchgeführt wird. Die Dicke der Magnetschicht beträgt im allgemeinen zwischen 3 und 15 μm. Selbstverständlich können mit den wässrigen Polyurethandispersionen auch Mehrfach-Schichten aufgetragen werden und auch über eine aus in organischen Lösungsmitteln löslichen Bindemittelschicht geschichtet werden.

Die erfindungsgemässen Speichermedien zeichnen sich durch ausgezeichnete mechanische Eigenschaften aus und haben eine Ausrichtbarkeit und Packungsdichte, die mindestens den Speichermedien, die mittels in organischen Lösungsmitteln löslichen Bindemitteln hergestellt sind, entsprechen.

Die Erfindung wird nachfolgend anhand der folgenden Beispiele näher erläutert, ohne dass die Erfindung auf die folgenden Beispiele begrenzt ist.

Beispiel 1

    120    g $H_2O$ dest.
    0,5    g Na-Polyphosphat
    0,5    g Polacrylat-dispergator
    100    g $\gamma$-$Fe_2O_3$

Die vorstehenden Bestandteile wurden in einer Planeten-Kugelmühle 30 Std. gemahlen. Anschliessend wird die Pigmentpaste in 65 g einer wässrigen anionischen Polyester-Polyurethandispersion mit einem Gehalt von 2,4 Gew.-% COO-Gruppen, bezogen auf einen Feststoffgehalt von 35%, eingerührt. Die Polyurethandispersion wurde hergestellt in Analogie zu Beispiel 3 der britischen Patentschrift 1 076 688 unter Verwendung von Adipinsäureneopentylglykol-hexandiolpolyester, 4,4'-Diisocyanato-dicyclohexylmethan, Dimethylpropionsäure (neutralisiert mit Triethylamin als ionische Aufbaukomponente und N-methylpyrrolidon als Hilfslöser).

Die Dispersion wurde auf einen 12 µm dicken Polyethylenterephthalatträger mittels eines Extrudergiessers aufgetragen, magnetisch ausgerichtet, getrocknet zu einer Schichtdicke von 4 µm und kalandriert. Die Folie wurde geschnitten auf 3,81 mm Breite. Die Bänder weisen gute Abriebfestigkeit und Gleiteigenschaften auf. Ihre magnetischen Werte sind in der Tabelle aufgeführt, wobei die gute Ausrichtbarkeit zu erkennen ist.

Beispiel 2
300   g   $H_2O$ dest.
  2,5 g   $NH_3$ konz.
  2,5 g   Na-Polyphosphat
  2,5 g   Homopolymeres der Acrylsäure (Molgew. 200 000)
255   g   $\gamma$-$Fe_2O_3$
137   g   Polyurethandispersion nach Beispiel 1

Die gesamten Bestandteile wurden im Gegensatz zu Beispiel 1 gemeinsam in einer Perlmühle 3 Std. gemahlen. Das Volumenverhältnis $\gamma$-$Fe_2O_3$: Polyurethan ist 1:1. Der Schichtauftrag und die weitere Verarbeitung erfolgte wie in Beispiel 1.

Beispiel 3
300   g   $H_2O$ dest.
  2,5 g   $NH_3$ konz.
  2,5 g   Na-Polyphosphat
  2,5 g   Homopolymeres der Acrylsäure (Molgew. 200 000)
255   g   $\gamma$-$Fe_2O_3$
177   g   Polyurethandispersion nach Beispiel 1

Die Verarbeitung der vorstehenden Bestandteile erfolgt wie in Beispiel 2, mit dem Unterschied, dass das Volumenverhältnis zwischen $\gamma$-$Fe_2O_3$ und Polyurethan (Feststoff) auf 1,2:1 erhöht wurde. Es wurde eine sehr abriebfeste und gleitende Schicht mit guter magnetischer Ausrichtung erhalten.

Beispiel 4
1300 g   $H_2O$ dest.
  13 g   Homopolymeres der Acrylsäure (Molgew. 200 000)
  13 g   Na-Polyphosphat
  26 g   Blockpolymerisat aus Polyethylenoxid (80%) und Polypropylenoxid (20%)
   2 g   Blockpolymerisat aus Polyethylenoxid (10%) und Polypropylenoxid (90%)
1300 g   $\gamma$-$Fe_2O_3$
620 g   Polyurethandispersion (40%ig) mit einem Gehalt von 0,96% $SO_3$-Gruppen und einer Teilchengrösse von 100 nm–400 nm

Die Polyurethandispersion wurde hergestellt in Analogie zu Beispiel 4 der DE-OS 2 035 732 und unter Verwendung der dort angegebenen Ausgangsmaterialien.

Die vorstehenden Bestandteile wurden in einer Perlmühle im Umlauf bei einem Durchsatz von 300 ml/min 10 Std. gemahlen. Das Volumenverhältnis von magnetischem Pigment zu Polyurethan (Feststoff) ist 0,8:1. Die danach erhaltene Schicht brachte vergleichbare Ergebnisse zu den vorigen Beispielen.

Beispiel 5
Eine in der gleichen Weise wie in Beispiel 4 hergestellte Beschichtungsdispersion unter Verwendung einer ähnlich aufgebauten wässrigen Polyurethandispersion, jedoch unter Variation der Mengenverhältnisse, so dass ein Gehalt von 1,4 Gew.-% $SO_3^-$-Gruppen resultiert, und einem Feststoffgehalt von 30%, hergestellt nach DE-OS 2 446 440 (Beispiel 8) und einer Teilchengrösse <400 nm, wurde auf einen 12 µm dicken Polyethylenterephthalat-Schichtträger aufgetragen und in üblicher Art weiter verarbeitet.

Es wurde ein Magnetband mit guten mechanischen und speichertechnischen Eigenschaften erhalten.

Vergleichsbeispiel
729   g   $\gamma$-$Fe_2O_3$
167   g   teilhydrolisiertes Mischpolymerisat aus Vinylchlorid/Vinylacetat
  18   g   Gemisch von primären und sekundären Phosphorsäureestern ethoxylierten Alkylphenol
  37   g   Dodecylbenzolsulfonsäure
  1,5 g   Hydrochinon
711   g   Ethylacetat
704   g   Butylacetat

Die vorstehenden Bestandteile wurden in einer Sandmühle ausreichend dispergiert und die Mischung in üblicher Weise auf einen 12 µm starken Polyethylenterephthalat-Schichtträger aufgetragen und vor dem Trocknen einem Magnetfeld ausgesetzt.

Tabelle

| Versuche | Koerzitiv-kraft (kA/m) | $B_R/B_S$ | Packungs-dichte (g/cm$^3$) |
|---|---|---|---|
| Beispiel 1 | 28,2 | 0,84 | 1,75 |
| Beispiel 2 | 29,0 | 0,86 | 1,80 |
| Beispiel 3 | 28,6 | 0,83 | 1,80 |
| Beispiel 4 | 27,8 | 0.84 | 1,85 |
| Beispiel 5 | 28,2 | 0,84 | 1,85 |
| Vergleichs-beispiel | 28,6 | 0,82 | 1,85 |

Die Magnetbänder zeigen, wie aus der Tabelle ersichtlich, mit den wässrigen Polyurethandispersionen eine hohe Packungsdichte, wie sie mit den wässrigen Acrylatdispersionen nicht erreicht wird. Das $B_R/B_S$-Verhältnis gilt als Mass für die Vorzugsrichtung, wobei Werte erreicht werden, die denen eines Bandes mit in organischen Lösungsmitteln löslichen Bindemitteln entsprechen bzw. vergleichbar sind.

**Patentansprüche:**

1. Magnetisches Speichermedium bestehend aus einem flexiblen Schichtträger, insbesondere auf Basis von Polyethylenterephthalat und mindestens einer in Wasser dispergierbaren Bindemittel enthaltenden Magnetschicht, dadurch gekennzeichnet, dass die Magnetschicht als Bindemittel in Wasser dispergierte Polyurethane mit funktionellen, zur Salzbildung befähigte Gruppen und magnetisches Pigment enthält, wobei das Volumenverhältnis des magnetischen Pigments zum Polyurethan bezogen auf Feststoffgehalt zwischen 0,7:1 und 1,4:1 beträgt.

2. Magnetisches Speichermedium nach Anspruch 1, dadurch gekennzeichnet, dass die Bindemittel aus in Wasser dispergierten Polyurethan-Ionomeren mit einer Teilchengrösse von 20 nm bis 1000 nm bestehen, vorzugsweise unter 400 nm.

3. Magnetisches Speichermedium nach Anspruch 1 und 2, dadurch gekennzeichnet, dass das Bindemittel aus anionischen Polyurethan-Ionomeren mit einem Gehalt von 0,02–13 Gew.-% an funktionellen, zur Salzbildung befähigten Gruppen besteht.

4. Magnetisches Speichermedium nach Anspruch 1–3, dadurch gekennzeichnet, dass das anionische Polyurethan-Ionomer einen Gehalt von vorzugsweise 0,02–3 Gew.-% an $SO_3^-$ - und/oder $COO^-$-Gruppen enthält.

5. Magnetisches Speichermedium nach Anspruch 1–4, dadurch gekennzeichnet, dass die Dispergatoren ein Gemisch aus anorganischem Polyphosphat und einem wasserlöslichen Polymeren sind.

6. Magnetisches Speichermedium nach Anspruch 5, dadurch gekennzeichnet, dass der anorganische Dispergator Na-Polyphosphat ist.

7. Magnetisches Speichermedium nach Anspruch 5, dadurch gekennzeichnet, dass der anorganische Dispergator Na-hexametaphosphat ist.

8. Magnetisches Speichermedium nach Anspruch 4, dadurch gekennzeichnet, dass der organische Dispergator ein Salz der Polyacrylsäure oder Polymethacrylsäure ist.

9. Magnetisches Speichermedium nach Anspruch 4, dadurch gekennzeichnet, dass der organische Dispergator ein Blockpolymeres von Polyethylenoxid und Polypropylenoxid ist.

10. Verfahren zur Herstellung eines magnetischen Speichermediums, das als Bindemittel in Wasser dispergierte Polymere, sonstige Hilfsstoffe zur Herstellung eines magnetischen Aufzeichnungsmaterials und ferromagnetische Pigmentteilchen enthält, dadurch gekennzeichnet, dass

A das ferromagnetische Pigment mit einem anorganischen und/oder organischen Dispergator in Wasser vermischt wird,

B die Pigmentpaste einer wässrigen Dispersion von anionischen Polyurethanen mit einem Gehalt von 0,02 bis 13 Gew.-% an funktionellen, zur Salzbildung befähigten Gruppen zumischt, wobei das Volumenverhältnis der magnetischen Pigmente zu den trocknen Polyurethanionomeren zwischen 0,7:1 und 1,4:1 beträgt, die Dispersion in Stufe A oder B in einer ausreichenden Zeit zu einer einheitlichen Verteilung der Pigmentteilchen gemahlen und anschliessend die so erhaltene Dispersion auf einen flexiblen Schichtträger aufgetragen magnetisch ausgerichtet und zur Entfernung des Wassers getrocknet wird.

**Revendications**

1. Milieu magnétique d'enregistrement consistant en un support de couche flexible, en particulier à base de téréphtalate de polyéthylène, et au moins une couche contenant des liants dispersables dans l'eau, caractérisé en ce que la couche magnétique contient comme liants des polyuréthannes dispersables dans l'eau à groupes salifiables fonctionnels et un pigment magnétique, le rapport en volume du pigment magnétique au polyuréthane, rapporté à la teneur en matières solides, étant compris entre 0,7:1 et 1,4:1.

2. Milieu magnétique d'enregistrement selon la revendication 1, caractérisé en ce que les liants consistent en polyuréthannes ionomères dispersés dans l'eau ayant une grosseur de particules de 20 nm à 1000 nm, de préférence de moins de 400 nm.

3. Milieu magnétique d'enregistrement selon les revendications 1 et 2, caractérisé en ce que le liant consiste en polyuréthannes ionomères anioniques ayant une teneur en groupes salifiables fonctionnels de 0,02–13% en poids.

4. Milieu magnétique d'enregistrement selon les revendications 1–3, caractérisé en ce que le polyuréthanne ionomère anionique a une teneur préférée en groupes $SO_3^-$ et/ou $COO^-$ de 0,02–3% en poids.

5. Milieu mangétique d'enregistrement selon les revendications 1–4, caractérisé en ce que les dispersants sont un mélange de polyphosphate inorganique et d'un polymère soluble dans l'eau.

6. Milieu magnétique d'enregistrement selon la revendication 5, caractérisé en ce que le dispersant inorganique est du polyphosphate de sodium.

7. Milieu magnétique d'enregistrement selon la revendication 5, caractérisé en ce que le dispersant inorganique est l'hexamétaphosphate de sodium.

8. Milieu magnétique d'enregistrement selon la revendication 4, caractérisé en se que le dispersant organique est un sel d'acide polyacrylique ou d'acide polyméthacrylique.

9. Milieu mangétique d'enregistrement selon la revendication 4, caractérisé en ce que le dispersant organique est un polymère séquencé d'oxyde de polyéthylène et d'oxyde de polypropylène.

10. Procédé pour la préparation d'un milieu magnétique d'enregistrement qui contient comme liants des polymères dispersés dans l'eau, d'autres agents auxiliaires pour la préparation d'un matériau magnétique d'enregistrement et des particules ferromagnétiques de pigments, caractérisé en ce que:

A on mélange le pigment ferromagnétique dans l'eau avec un dispersant inorganique et/ou organique,

B on mélange la pâte de pigment avec une dispersion aqueuse de polyuréthannes anioniques ayant une teneur en groupes salifiables fonctionnels de 0,02–13% en poids, le rapport en volume des pigments magnétiques aux polyuréthannes ionomères secs étant compris entre 0,7:1 et 1,4:1,

on broie la dispersion dans l'étape A ou B pendant une durée suffisante jusqu'à une distribution uniforme des particules de pigments et ensuite on [applique] la dispersion ainsi obtenue sur un support de couche flexible, on l'oriente magnétiquement et on sèche pour éliminer l'eau.

**Claims**

1. Magnetic recording medium consisting of a flexible support, in particular on the basis of polyethylene terephthalate and at least one magnetic layer containing water dispersible binders, characterised in that the magnetic layer contains, as binders, water dispersible polyurethanes having functional groups capable of salt formation and magnetic pigment, the volumetric ratio of magnetic pigment to polyurethane, based on the solids content, being in the range of 0.7:1 to 1.4:1.

2. Magnetic recording medium according to Claim 1, characterised in that the binders consist of polyurethane ionomers dispersed in water and having a particle size of 20 nm to 1000 nm, preferably below 400 nm.

3. Magnetic recording medium according to Claim 1 and 2, characterised in that the binder consists of anionic polyurethane ionomers containing from 0.02 to 13% by weight of functional groups capable of salt formation.

4. Magnetic recording medium according to Claim 1 to 3, characterised in that the anionic polyurethane ionomer preferably contains 0.02 to 3% by weight of $SO_3^-$ and/or $COO^-$ groups.

5. Magnetic recording medium according to Claim 1 to 4, characterised in that the dispersing agents are a mixture of inorganic polyphosphate and a water soluble polymer.

6. Magnetic recording medium according to Claim 5, characterised in that the inorganic dispersing agent is sodium polyphosphate.

7. Magnetic recording medium according to Claim 5, characterised in that the inorganic dispersing agent is sodium hexametaphosphate.

8. Magnetic recording medium according to Claim 4, characterised in that the inorganic dispersing agent is a salt of polyacrylic acid or polymethacrylic acid.

9. Magnetic recording medium according to Claim 4, characterised in that the organic dispersing agent is a block polymer of polyethylene oxide and polypropylene oxide.

10. Process for the preparation of a magnetic recording medium containing binders consisting of polymers dispersed in water, other auxiliary agents for the preparation of a magnetic recording material and ferromagnetic pigment particles, characterised in that

A the ferromagnetic pigment is mixed with an inorganic and/or organic dispersing agent in water,

B the pigment paste is added to an aqueous dispersion of anionic polyurethanes containing from 0.02 to 13% by weight of functional groups capable of salt formation, in which the volumetric proportion of magnetic pigment to anhydrous polyurethane ionomers is in the range of 0.7:1 to 1.4:1,

the dispersion is ground in stage A or B for a sufficient length of time to achieve uniform distribution of the pigment particles and the resulting dispersion is then applied to a flexible support, magnetically oriented and dried to remove the water.